**Europäisches Patentamt**

**European Patent Office**

**Office européen des brevets**

(19)

(11) Numéro de publication : **0 007 139**
**B1**

(12)

# FASCICULE DE BREVET EUROPÉEN

(45) Date de publication du fascicule du brevet :
03.02.82

(51) Int. Cl.³ : **H 01 G   1/08, H 01 G   1/02**

(21) Numéro de dépôt : **79200372.5**

(22) Date de dépôt : **06.07.79**

(54) **Condensateur multiple équipé de dispositifs de refroidissement et son procédé de fabrication.**

(30) Priorité : **18.07.78 EP 78200110**

(43) Date de publication de la demande :
**23.01.80 (Bulletin 80/02)**

(45) Mention de la délivrance du brevet :
**03.02.82 Bulletin 82/05**

(84) Etats contractants désignés :
**AT BE CH DE FR GB IT LU NL SE**

(56) Documents cités :
**DE - A - 2 342 356**
**DE - B - 1 269 247**
**FR - A - 989 052**
**FR - A - 2 405 546**
**US - A - 2 768 230**

(73) Titulaire : **ASEA-JUMET, Société Anonyme**
**Siège Social Zone Industrielle Jumet-Gosselies**
**B-6040 Jumet (BE)**

(72) Inventeur : **Schmidt, Jacques**
**Rue de la Cascade 29**
**B-6090 Couillet (BE)**

(74) Mandataire : **Bossard, Franz et al**
**ACEC - Service des Brevets Boîte Postale 4**
**B-6000 Charleroi (BE)**

Imprimerie Jouve, 18, rue St-Denis, 75001 Paris, France

Condensateur multiple équipé de dispositifs de refroidissement et son procédé de fabrication

La présente invention a pour objet des condensateurs de puissance, notamment, mais non exclusivement, des condensateurs pour basse tension, composés de rouleaux de condensateurs à armatures reliées à des bornes extérieures, logés dans un boîtier métallique et dont le refroidissement est assuré à l'aide de tôles conductrices de chaleur disposées pour entourer chaque rouleau sur une partie du pourtour et pour établir un contact de conduction thermique avec deux parois opposées du boîtier au moyen des extrémités de ces tôles appliquées élastiquement contre ces parois. Un tel condensateur est connu, par exemple par la demande de brevet DE-A-1269247 dans lequel les tôles sont disposées en dessous de chaque rouleau de manière à l'entourer sur environ la moitié du pourtour tandis que les deux extrémités non cintrées de chaque tôle sont appliquées élastiquement sur deux parois opposées du boîtier métallique. D'autres condensateurs connus de ce genre nécessitent des aménagements compliqués ou coûteux tel que l'enrobage des rouleaux dans des gaines ou boîtiers métalliques ou des ressorts qui assurent une certaine pression de contact entre les tôles conductrices de chaleur et les parois du boîtier métallique d'une part et des rouleaux de condensateur d'autre part.

Le but de l'invention est d'assurer une évacuation efficace de la chaleur produite dans les rouleaux de condensateur au moyen de tôles conductrices de la chaleur de forme très simple dont l'introduction dans les boîtiers métalliques, loin de compliquer le procédé de fabrication, facilite plutôt les manipulations et permet d'atteindre une rapidité de montage plus grande que celle pour des condensateurs non munis de tôles conductrices de chaleur.

Le condensateur suivant l'invention est caractérisé en ce que les tôles conductrices de chaleur en un métal élastique, de largeur égale environ à la hauteur d'un rouleau de condensateur, sont cintrées de manière à épouser chacune au moins la moitié du pourtour de chacun de plusieurs rouleaux de condensateur.

L'invention a pour objet aussi un procédé de fabrication de tels condensateurs, caractérisé en ce qu'on conforme des rubans de tôle conductrice de chaleur de manière qu'ils présentent une ou plusieurs parties de surfaces cylindriques cintrées, qu'on pince dans les parties concaves du ruban des rouleaux de condensateur, qu'on comprime l'assemblage ruban et rouleaux de condensateur et qu'on l'insère entre deux parois opposées du boîtier métallique de manière que le ruban cintré reste comprimé et est poussé élastiquement en contact étroit d'une part sur environ la moitié de la surface de chaque rouleau et d'autre part sur deux parois opposées du boîtier métallique.

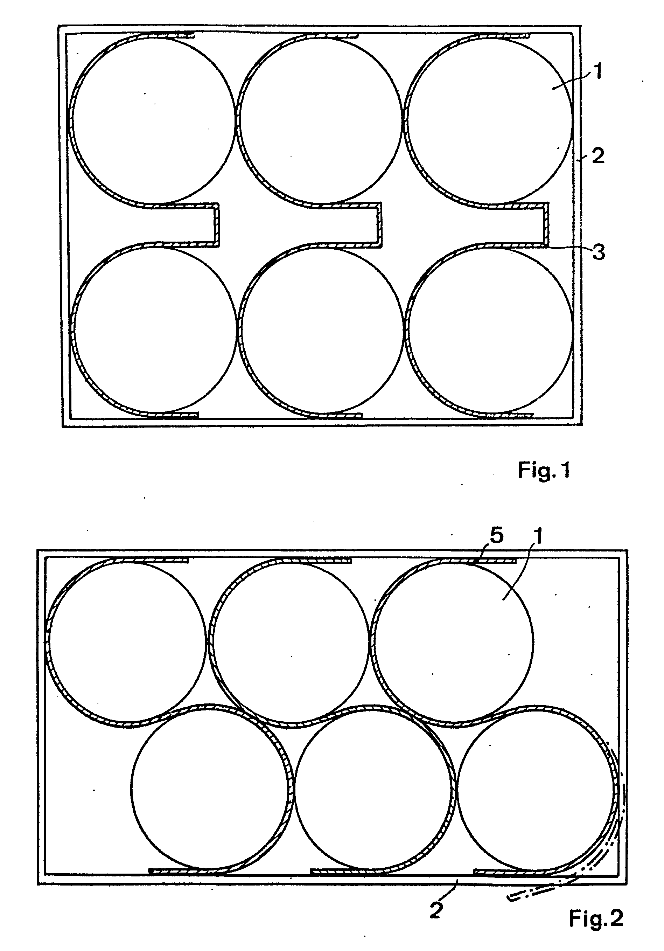

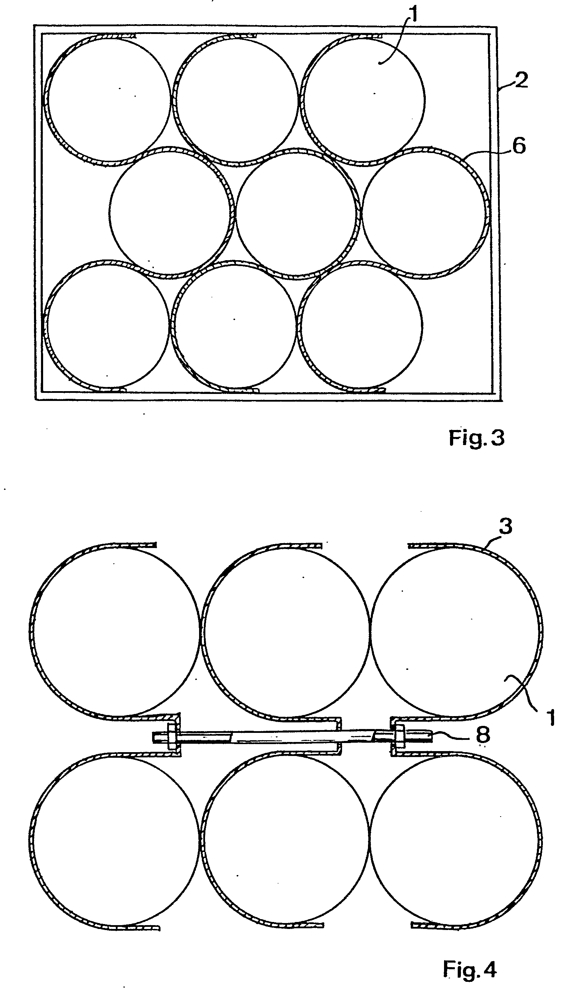

L'invention est expliquée ci-dessous par rapport à quelques exemples de forme d'exécution représentés au dessin annexé. Les figures 1, 2, 3, du dessin sont des coupes à travers des condensateurs composés de un ou de plusieurs rouleaux de condensateur. La figure 4 est une coupe analogue d'un ensemble de rouleaux perpendiculaire aux axes des rouleaux, avant le montage dans un boîtier.

A la figure 1 est montré en coupe un condensateur composé de six rouleaux 1 de condensateur, logé dans un boîtier 2. Les armatures, non représentées, des rouleaux 1 sont reliées à des bornes extérieures, non représentées. Chaque rouleau de condensateur 1 est en contact intime avec un ruban de tôle 3 conductrice de chaleur de largeur égale environ à la hauteur du rouleau 1. Les rubans 3 sont cintrés de manière à épouser chacun environ la moitié du pourtour de chacun de deux rouleaux 1. Les extrémités non cintrées de chaque ruban 3 sont disposées en contact intime avec deux parois opposées du boîtier métallique 2. Ce contact intime n'exclut pas une fine couche d'isolant électrique entre les extrémités des rubans 3 et les parois du boîtier 2. Lors de la fabrication du condensateur suivant la figure 1, les rubans de tôle 3 sont conformés de manière à ce qu'ils présentent deux parties de surfaces cylindriques cintrées. Dans les parties concaves du ruban cintré, on retient par pinçage des rouleaux de condensateur 1. Lors du montage, on assemble avec chaque ruban cintré 3 deux rouleaux 1, on comprime l'assemblage rouleaux 1 et ruban 3 dans la direction qui rapproche l'un de l'autre les extrémités non cintrées du ruban 3 et on insère l'assemblage comprimé entre deux parois opposées du boîtier 2. De cette manière le ruban 3 reste comprimé entre les deux parois et est poussé élastiquement en contact étroit d'une part sur environ la moitié de la surface de chaque rouleau et d'autre part sur deux parois opposées du boîtier métallique. Grâce à la pression de contact exercée par l'élasticité des rubans 3 comprimés, la chaleur s'évacue par les rubans 3 vers les parois du boîtier 2, même si les interstices entre les rouleaux sont remplis d'une substance calorifuge telle par exemple de la poudre de vermiculite et même si une mince couche d'isolant électrique est interposée entre les rubans et les parois du boîtier 2.

Les rubans 3 peuvent être en n'importe quel métal possédant une élasticité et un coefficient de conductibilité calorifique suffisants, par exemple en cuivre, aluminium, acier, etc. En raison de son poids spécifique très faible et de sa conductibilité calorifique excellente, l'aluminium est particulièrement bien adapté. Des rubans en aluminium présentent une élasticité suffisante et ne sont pas soumis à la corrosion. Les interstices entre les rouleaux peuvent être remplis notamment par de la poudre de vermiculite.

Dans une autre solution montrée à la figure 2 des rubans 4 sont cintrés, non en double C comme à la figure 1, mais en S et épousant seulement un peu plus que la moitié du pourtour de chaque rouleau.

Dans une solution montrée à la figure 3, des rubans 6 en double S sont assemblés chacun, non avec 2, mais avec 3 rouleaux 1 et insérés par paquets de trois rouleaux 1 dans le boîtier 2.

Il est à remarquer que le procédé de fabrication de condensateurs comme décrit ci-dessus est particulièrement avantageux lorsque les parois opposées d'un boîtier métallique 2 sont distantes l'une de l'autre de moins d'un empan ou de 20 cm, de manière que les assemblages de rubans cintrés et rouleaux peuvent être saisis et comprimés à une seule main et insérés dans le boîtier.

Il est également avantageux, notamment dans le cas de rubans pliés en double C d'assembler au préalable tous les rouleaux qui doivent être introduits dans un boîtier au moyen d'un pinçage dans les parties concaves des rubans pliés en double C et par un assemblage au moyen d'un tirant 8 tel que montré à la figure 4.

Dans le cas d'un assemblage selon les figures 1 à 3 il est possible de préassembler le tout en l'entourant d'un tour de bande adhésive, isolante électrique.

## Revendications

1. Condensateur de puissance composé de rouleaux de condensateur (1) à armatures reliées à des bornes extérieures, logés dans un boîtier métallique (2) et dont le refroidissement est assuré à l'aide de tôles conductrices de chaleur (3) disposées pour entourer chaque rouleau (1) sur une partie du pourtour et pour établir un contact de conduction thermique avec deux parois opposées du boîtier (2) au moyen des extrémités de ces tôles appliquées élastiquement contre ces parois, caractérisé en ce que les tôles conductrices de chaleur (3,5,6) en un métal élastique, de largeur égale environ à la hauteur d'un rouleau de condensateur (1), présentent plusieurs cintrages de manière à épouser chacune au moins la moitié du pourtour de chacun de plusieurs rouleaux de condensateur (1).

2. Condensateur suivant la renvendication 1, caractérisé en ce que les interstices entre les rouleaux sont remplis de poudre de vermiculite.

3. Condensateur suivant une des revendications 1 ou 2, caractérisé en ce que les rubans (3) sont cintrés en double C l'un disposé au-dessus de l'autre.

4. Condensateur suivant une des revendications 1 ou 2, caractérisé en ce que les rubans (5) sont cintrés en S.

5. Condensateur suivant la renvendication 3, caractérisé en ce que les rubans (6) sont cintrés en double S.

6. Procédé de fabrication d'un condensateur suivant une des revendications précédentes, caractérisé en ce qu'on conforme des rubans de tôle conductrice de chaleur (3,5,6) de manière qu'ils présentent plusieurs parties de surfaces cylindriques cintrées, qu'on pince dans les parties concaves du ruban cintré (3) des rouleaux de condensateur (1), qu'on comprime l'assemblage ruban (3,5,6) et rouleaux de condensateur (1) et qu'on insère l'assemblage ruban (3,5,6) et rouleaux (1) comprimés entre deux parois opposées d'un boîtier métallique (2) de manière que le ruban (3,5,6) cintré reste comprimé et est poussé élastiquement en contact étroit d'une part sur environ la moitié de la surface de chaque rouleau (1) et d'autre part sur les deux parois opposées du boîtier métallique (2).

7. Procédé de fabrication suivant la revendication 6 caractérisé en ce que tous les rouleaux (1) pincés dans les parties concaves des rubans (3,5,6) sont assemblés en une unité avant d'être insérés dans le boîtier (2).

## Claims

1. Power capacitor consisting of capacitor rolls (1) having coatings connected to external terminals, which rolls are accommodated in a metallic casing (2) and the cooling of which is ensured by means of heat-conducting metal sheets (3) arranged so as to surround each roll (1) over a part of the periphery and so as to make heat-conducting contact with two opposite walls of the casing (2) by means of the ends of these metal sheets applied elastically against these walls, characterised in that the heat-conducting metal sheets (3,5,6) made of an elastic metal and having a width approximately equal to the height of a capacitor roll (1) have several bends, so that they each match at least half the periphery of each of several capacitor rolls (1).

2. Capacitor according to Claim 1, characterised in that the gaps between the rolls are filled with vermiculite powder.

3. Capacitor according to one of Claims 1 or 2, characterised in that the strips (3) are bent in the form of a double C, one arranged above the other.

4. Capacitor according to one of Claims 1 or 2, characterised in that the strips (5) are bent in the form of an S.

5. Capacitor according to Claim 3, characterised in that the strips (6) are bent in the form of a double S.

6. Process for manufacturing a capacitor according to one of the preceding claims, characterised in that strips of heat-conducting sheet metal (3,5,6) are shaped in such a way that they possess several bent, cylindrical surface portions, in that capacitor rolls (1) are gripped in the concave parts of the bent strip (3), in that the assembly of strip (3,5,6) and capacitor rolls (1) is compressed, and in that the assembly of strip (3,5,6) are compressed rolls (1) is inserted between two opposite walls of a metallic casing (2), in such a way that the bent strip (3,5,6) remains compressed and is pushed elastically into close contact, on the one hand, over approximately half the surface of each roll (1) and, on the other hand, on the two opposite walls of the metallic casing (2).

7. Manufacturing process according to Claim 6, characterised in that all the rolls (1) gripped in the concave parts of the strips (3,5,6) are assembled into a unit before being inserted in the casing (2).

## Ansprüche

1. Leistungskondensator, bestehend aus Kondensatorwickeln (1) mit Armaturen, die an äußere Klemmen angeschlossen sind, welche Wickel in einem Metallgehäuse (2) untergebracht sind und deren Kühlung mit Hilfe wärmeleitender Bleche (3) sichergestellt ist, die so angeordnet sind, daß sie jeden Wickel (1) auf einem Teil seines äußeren Umfanges umschließen und einen wärmeleitenden Kontakt mit zwei gegenüberliegenden Wänden des Gehäuses (2) mittels der elastisch and diesen Wänden anliegenden Enden dieser Bleche herstellen, dadurch gekennzeichnet, daß die wärmeleitenden Bleche (3,5,6) aus einem elastischen Metall, dessen Breite angenähert gleich der Höhe eines Kondensatorwickels (1) ist, mehrere Einbiegungen aufweisen, von denen sich jede wenigstens um den halben Umfang an jeden von mehreren Kondensatorwickeln (1) anschmiegt.

2. Kondensator nach Anspruch 1, dadurch gekennzeichnet, daß die Zwischenräume zwischen den Wicklungen mit Vermicolitpulver ausgefüllt sind.

3. Kondensator nach Anspruch 1 oder 2, dadurch gekennzeichnet, daß die Bänder (3) in Form eines doppelten C, von denen eines über dem anderen angeordnet ist, gebogen sind.

4. Kondensator nach Anspruch 1 oder 2, dadurch gekennzeichnet, daß die Bänder (5) 8-förmig gebogen sind.

5. Kondensator nach Anspruch 3, dadurch gekennzeichnet, daß die Bänder (6) doppelt S-förmig gebogen sind.

6. Verfahren zur Herstellung eines Kondensators nach einem der vorhergehenden Ansprüche, dadurch gekennzeichnet, daß man wärmeleitende Blechbänder (3,5,6) so verformt, daß sie mehrere Teile mit zylindrisch gebogenen Oberflächen aufweisen, daß man in die konkaven Abschnitte der gebogenen Bänder (3,5,6) die Kondensatorwickel (1) einklemmt, daß man die Einheit, Bänder (3,5,6) und Wickel (1), zusammendrückt und daß man diese zusammengedrückte Einheit zwischen zwei gegenüberliegende Wände eines metallischen Gehäuses (2) einsetzt, derart, daß das gebogene Band (3,5,6) zusammengedrückt bleibt und elastisch in engen Kontakt einerseits mit der etwa halben Oberfläche jedes Wickels (1), andererseits mit den zwei gegenüberliegenden Wänden des metallischen Gehäuses (2) gehalten ist.

7. Verfahren zur Herstellung nach Anspruch 6, dadurch gekennzeichnet, daß alle in die konkaven Abschnitte der Bänder (3,5,6) eingeklemmten Wickel (1) vor dem Einsetzen in das Gehäuse (2) zu einer Einheit verbunden werden.

Fig. 1

Fig. 2

1

Fig. 3

Fig. 4